# EUROPÄISCHE PATENTSCHRIFT

(11) **EP 0 856 297 B1**
(45) Veröffentlichungstag und Bekanntmachung des Hinweises auf die Patenterteilung: **20.07.2005**
(21) Anmeldenummer: 97118029.4
(22) Anmeldetag: 17.10.1997
(51) Int. Cl.: A61C 17/02

(54) **Verfahren und Vorrichtung zum Reinigen und Pflegen der Zähne und des Zahnfleischs**
Method and device for the cleaning and care of teeth and gums
Procédé et dispositif pour le nettoyage et le soin des dents et des gencives

(30) Priorität: 23.12.1996 DE 19654099
(43) Veröffentlichungstag der Anmeldung: 05.08.1998
(73) Patentinhaber: Braun GmbH, 61476 Kronberg (DE)
(72) Erfinder: Sauer, Michael, 65520 Bad Camberg (DE); Schaefer, Norbert, 60322 Frankfurt (DE); Stolper, Michael, 65760 Eschborn (DE)

(56) Entgegenhaltungen:
- US-A- 3 605 734
- US-A- 3 828 771
- US-A- 4 941 459
- US-A- 5 511 693

## Beschreibung

Die Erfindung betrifft ein Verfahren zum Reinigen und Pflegen der Zähne und des Zahnfleisches, bei dem Luft einer Flüssigkeit zugeführt und die Flüssigkeit anschließend zu einem Auslaß gefördert wird und aus diesem austritt. Die Erfindung betrifft auch eine Spritzdüse für eine Vorrichtung zur Reinigung und Pflege der Zähne und des Zahnfleischs, insbesondere für ein Handstück einer Munddusche, mit einem Düsenkopf, in dem eine Zuleitung verläuft, die in einen Auslaß mündet, aus dem eine Flüssigkeit austreten kann sowie eine Munddusche mit einer Spritzdüse.

Ein derartiges Verfahren sowie eine derartige Spritzdüse sind aus der US 3 828 771 bereits bekannt. Dort ist eine Munddusche beschrieben, die an einen Wasserhahn angeschlossen wird und die komplexen Strukturen elektrisch betriebener Geräte mit Pumpen und dergleichen zur Erzeugung pulsierender Wasserstrahlen vermeiden soll. Insoweit wird nach diesem Stand der Technik Wasser aus einem herkömmlichen Hauswasserhahn durch eine Röhre mit einem Venturiabschnitt beschickt, wobei die Röhre eine Luftzufuhr stromabwärts des Venturiabschnitts aufweist, so daß dem Wasser Luft zugemischt werden kann. Der Durchmesser dieser Luftblasen liegt im Bereich von 0,005 inch bis 0,050 inch (127 µm bis 1270 µm). Unter normalem Betrieb wird somit ein Hochgeschwindigkeitswasserstrahl erzeugt unter Anwesenheit dieser Luftblasen.

Die US 4 941 459 betrifft ebenfalls eine Munddusche, die an einen Hauswasseranschluß anschließbar ist. Auch in diesem Fall soll dem Wasser Luft zugemischt werden, um einen Pulsationseffekt zu erzeugen. Auch die US 5 511 693 bzw. US 3 605 734 offenbaren Mundduschen, bei denen dem Wasser Luftblasen zugemischt werden.

Ein weiteres Verfahren sowie eine derartige Spritzdüse sind aus der europäischen Patentschrift EP 0 175 881 B2 bekannt. Dort ist eine elektrisch angetriebene Munddusche zur Mund- und Zahnpflege beschrieben, die ein Handstück aufweist, auf das eine Spritzdüse aufgesteckt werden kann. Die Spritzdüse ist mit einem Düsenkopf versehen, in dem eine Zuleitung von einem mit dem Handstück verbundenen Zulauf zu einem Auslaß verläuft. Im eingeschalteten Betriebszustand der Munddusche wird Wasser über das Handstück zu der Spritzdüse und damit zu dem Düsenkopf gepumpt. Dort tritt das Wasser in der Form eines Einzelstrahls aus dem Auslaß aus. Dieser Einzelstrahl kann von einem Benutzer zur Pflege und Reinigung der Zähne und des Zahnfleischs verwendet werden. Insbesondere ist der Einzelstrahl dazu geeignet, die Zahnfleischtaschen zwischen den Zähnen und dem Zahnfleisch von Speiseresten oder dergleichen zu befreien.

Des weiteren ist bekannt, daß Entzündungen des Zahnfleischs, beispielsweise Gingivitis oder Parodontitis durch Bakterien ausgelöst werden. Dabei handelt es sich hauptsächlich um anaerobe Bakterien, die sich insbesondere in den Zahnfleischtaschen ansiedeln. Man unterscheidet fakultativ anaerobe Bakterien, beispielsweise Actinobacillus actinomycetemcomitans, die in einer Luftatmosphäre leben können, und strikt anaerobe Bakterien, beispielsweise Porphyromonas gingivalis, die nur unter Sauerstoffausschluß überleben können.

Es hat sich gezeigt, daß in beiden Fällen insbesondere das Wachstum der Bakterien durch die Zufuhr von Sauerstoff nachhaltig gestört oder sogar beendet werden kann. Dies kann dann letztendlich zu einem Absterben der Bakterien führen und damit zu einer Behandlung und Heilung der Entzündung des Zahnfleischs.

Hierzu ist es erforderlich, die Bakterien mit möglichst viel Sauerstoff zu konfrontieren. Dies bedeutet, daß möglichst viel Sauerstoff möglichst tief in die Zahnfleischtaschen eingebracht werden muß, um dort die Bakterien in ihrem Wachstum stören zu können.

Übliches Leitungswasser weist einen Sauerstoffgehalt von etwa 40 % - bis etwa 80 % - Sättigung auf, was etwa 3-8 mg/l Sauerstoff im Temperaturbereich von 20 - 40°C entspricht. Es hat sich herausgestellt, daß dies zu wenig Sauerstoff für eine erfolgreiche Behandlung und Heilung von Entzündungen des Zahnfleischs ist.

Zusätzlich kann dem Wasser auch noch Luft zugefügt werden, beispielsweise dadurch, daß nicht nur die Flüssigkeit, sondern auch noch Luft von der Pumpe angesaugt und zu dem Auslaß gefördert wird. Hier hat es sich jedoch herausgestellt, daß aufgrund des großen Unterschieds in der Dichte von Wasser und Luft sich diese Stoffe sehr schnell wieder entmischen und die Luft wieder entweicht. Die Luft und damit der Sauerstoff gelangt deshalb nicht in die Zahnfleischtaschen und kann somit keinen Beitrag zur Behandlung oder Heilung der Entzündung des Zahnfleischs beitragen.

Eine andere Möglichkeit besteht darin, gasförmigen Sauerstoff direkt in die Zahnfleischtaschen zu blasen. Hier darf aufgrund der Emboliegefahr für den Benutzer jedoch nur ein sehr geringer Druck angewendet werden, der keine Reinigung der Zahnfleischtaschen von Speiseresten und dergleichen ermöglicht.

Bei allen beschriebenen Möglichkeiten ist es somit bisher nicht gelungen, die Reinigungs- und Spülwirkung von Wasser mit der heilenden Wirkung von Sauerstoff erfolgreich zu verknüpfen.

Aufgabe der Erfindung ist es, ein Verfahren sowie eine Spritzdüse der eingangs genannten Art zu schaffen, mit denen die Zähne und das Zahnfleisch gereinigt und gepflegt und auch tief in den Zahnfleischtaschen angesiedelte Entzündungen behandelt und geheilt werden können.

Diese Aufgabe wird durch die Erfindung dadurch gelöst, daß bei einem Verfahren der eingangs genannten Art stromabwärts der Luftzufuhr zur Flüssigkeit mit Hilfe einer Engstelle vor dem Auslaß mikrofeine Gasblasen in der Flüssigkeit erzeugt werden und die Flüssigkeit mit den mikrofeinen Gasblasen aus dem Auslaß austritt, wobei die mikrofeinen Gasblasen einen Durchmesser von kleiner als bis zu etwa 200 µm aufweisen.

Die mikrofeinen Gasblasen weisen eine sehr geringe Größe von weniger als 200 µm auf, insbesondere im Bereich von wenigen Mikrometern. Dies hat zur Folge, daß die mikrofeinen Gasblasen nur sehr wenig Auftrieb in der Flüssigkeit haben. Eine Entmischung der mikrofeinen Gasblasen aus der Flüssigkeit findet somit im wesentlichen nicht statt. Die mikrofeinen Gasblasen bleiben also in der Flüssigkeit erhalten und entweichen nicht.

Im Falle einer Vorrichtung zur Reinigung und zur Pflege des Zahnfleischs und der Zähne können auf diese Weise mikrofeine Gasblasen in das Wasser eingebracht werden, die Sauerstoff enthalten. Wie erläutert, bleibt dieser Sauerstoff in dem Wasser enthalten und kann damit zusammen mit dem Wasser bis tief in die Zahnfleischtaschen vordringen. Dort hat das Wasser die bekannte reinigende Wirkung, mit der Speisereste und dergleichen entfernt werden. Der gleichzeitig mittels der mikrofeinen Gasblasen in die Zahnfleischtaschen geförderte Sauerstoff kann dort auf eventuell vorhandene Entzündungen des Zahnfleischs heilend einwirken, indem er das Wachstum der die Entzündung auslösenden Bakterien stört oder gar beendet.

Es hat sich dabei gezeigt, daß aufgrund der mikrofeinen Gasblasen die Menge des die Bakterien konfrontierenden Sauerstoffs so hoch ist, daß eine erfolgreiche Behandlung und Heilung von Entzündungen des Zahnfleischs tatsächlich erreicht wird.

Durch die Erfindung wird also eine Verknüpfung der Reinigungs- und Spülwirkung des Wassers und der heilenden Wirkung von Sauerstoff erreicht. Es wird eine Munddusche zur Verfügung gestellt, mit der nicht nur die Zähne und das Zahnfleisch gereinigt und gepflegt werden können, sondern mit der gleichzeitig aufgrund der mikrofeinen Gasblasen eine heilende Wirkung auf vorhandene Entzündungen des Zahnfleischs ausgeübt werden kann.

Der Durchmesser und damit auch der Auftrieb der mikrofeinen Gasblasen ist derart eingestellt, daß die Gasblasen nach dem Austritt aus dem Auslaß möglichst lange in der Flüssigkeit erhalten bleiben. Besonders zweckmäßig ist es dabei, wenn der Durchmesser der mikrofeinen Gasblasen derart eingestellt ist, daß diese nach dem Austritt aus dem Auslaß so lange in der Flüssigkeit erhalten bleiben, bis sie die Zahntaschen zwischen den Zähnen und dem Zahnfleisch erreichen. Dies hat den Vorteil, daß die mikrofeinen Gasblasen mit dem Sauerstoff tatsächlich so lange in der Flüssigkeit enthalten bleiben, bis sie örtlich diejenigen Stellen in den Zahnfleischtaschen erreichen, an denen die entzündungsauslösenden Bakterien angesiedelt sind. Damit wird gewährleistet, daß die heilende Wirkung des Sauerstoffs in vollem Umfang zur Geltung kommen kann.

Der Durchmesser der mikrofeinen Gasblasen ist kleiner als etwa 200 µm und liegt insbesondere im Bereich von etwa 1 µm bis etwa 50 µm.

Bei Versuchen hat sich herausgestellt, daß bei mikrofeinen Gasblasen mit einem Durchmesser, der größer ist als etwa 200 µm, langsam wieder eine Entmischung des Sauerstoffs aus der Flüssigkeit auftritt. Dies bedeutet, daß durch die Verwendung von mikrofeinen Gasblasen mit einem Durchmesser bis zu etwa 200 µm gewährleistet ist, daß der Sauerstoff in der Flüssigkeit enthalten bleibt und somit zusammen mit der Flüssigkeit bis tief in die Zahnfleischtaschen vordringen kann.

Bei einem Durchmesser, der kleiner ist als etwa 50 µm, konnten in den Versuchen eine besonders große Anzahl mikrofeiner Gasblasen erzeugt werden. Dies ist besonders vorteilhaft, da mit der großen Anzahl mikrofeiner Gasblasen ein großes Volumen an Sauerstoff in die Zahnfleischtaschen gefördert werden kann.

Bei einer besonders vorteilhaften Weiterbildung der Erfindung werden etwa die mittleren 80 % der mikrofeinen Gasblasen mit einem Durchmesser im Bereich von etwa 4 µm bis etwa 22 µm erzeugt. Der letztgenannte Wert kann dabei auch in einem Bereich von etwa 20 µm bis etwa 25 µm liegen. Der Großteil der mikrofeinen Gasblasen weist somit einen Durchmesser zwischen etwa 4 µm und etwa 22 µm auf. In den Versuchen hat sich gezeigt, daß mit Hilfe dieser etwa 80 % der mikrofeinen Gasblasen ein ausreichendes Volumen an Sauerstoff in die Zahnfleischtaschen gelangt, um dort vorhandene Entzündungen des Zahnfleischs erfolgreich zu behandeln.

Bei einer anderen besonders vorteilhaften Weiterbildung der Erfindung werden etwa 50 % der mikrofeinen Gasblasen mit einem Durchmesser von weniger als etwa 11 µm erzeugt. Dieser Wert, der gegebenenfalls auch in einem Bereich von etwa 10 µm bis etwa 12 µm liegen kann, hat sich in den Versuchen als besonders vorteilhafter Durchmesser der mikrofeinen Gasblasen herausgestellt. Insbesondere hat sich gezeigt, daß die Anzahl der mikrofeinen Gasblasen etwa bei diesem Wert des Durchmessers ein Maximum aufweist. Die Anzahl von mikrofeinen Gasblasen mit einem Durchmesser von etwa 11 µm ist also größer als die Anzahl mit einem jeweils größeren oder kleineren Durchmesser.

Bei einer besonders vorteilhaften Ausgestaltung der Erfindung werden die mikrofeinen Gasblasen mit Hilfe eines auf die Flüssigkeit ausgeübten Drucks erzeugt. Es wird damit die Tatsache ausgenützt, daß zum Beispiel in Wasser umso mehr Sauerstoff gelöst werden kann, je mehr Druck auf das Wasser ausgeübt wird. Mit Hilfe des Drucks wird also in besonders einfacher Weise der Gehalt des Sauerstoffs in dem Wasser erhöht.

Bei der Erfindung werden die mikrofeinen Gasblasen mit Hilfe einer Engstelle vor dem Auslaß erzeugt. Durch die Engstelle wird die geförderte und zu dem Auslaß fließende Flüssigkeit gestaut. Dies bedeutet gleichzeitig, daß der Druck auf die Flüssigkeit vor der Engstelle aufgrund des Staus erhöht wird. Diese Druckerhöhung hat die beschriebene Wirkung, daß mehr Sauerstoff in der Flüssigkeit gelöst werden kann. Insgesamt wird also mit Hilfe der Engstelle auf besonders einfache Weise der Gehalt des Sauerstoffs in der Flüssigkeit erhöht.

Gelangt nun die Flüssigkeit mit dem Sauerstoff an die Engstelle, so wird die Flüssigkeit beim Durchtritt durch die Engstelle plötzlich entspannt. Dies hat zur Folge, daß der Sauerstoff in der Form der mikrofeinen Gasblasen aus der Flüssigkeit entgast. Nach der Engstelle sind dann die mikrofeinen Gasblasen in der Flüssigkeit enthalten und werden mit dieser in die Zahnfleischtaschen befördert.

Besonders zweckmäßig ist es, wenn ein Druck in einem Bereich von etwa 2 bar bis etwa 20 bar erzeugt wird, insbesondere ein Druck in einem Bereich von etwa 5 bar bis etwa 8 bar. Je größer der Druck auf die Flüssigkeit ist, desto besser können die mikrofeinen Gasblasen erzeugt werden. Auf der anderen Seite darf der Druck auch nicht zu hoch sein, da ansonsten Verletzungen des Zahnfleischs durch den auftreffenden Flüssigkeitsstrahl auftreten können. Ein Druck in einem Bereich von etwa 5 bar bis etwa 8 bar hat sich dabei in den Versuchen als besonders vorteilhaft herausgestellt.

Bei einer anderen besonders vorteilhaften Ausgestaltung der Erfindung werden die mikrofeinen Gasblasen durch ein quirlartiges Rühren der Flüssigkeit erzeugt. Besonders zweckmäßig ist es dabei, wenn die Flüssigkeit danach verdichtet wird.

Bei einer anderen besonders vorteilhaften Ausgestaltung der Erfindung werden die mikrofeinen Gasblasen durch ein Zerhacken der Flüssigkeit erzeugt. Dies kann insbesondere dadurch geschehen, daß die Flüssigkeit durch eine Öffnung geleitet wird, die zyklisch geöffnet und geschlossen wird.

Die genannten Möglichkeiten zur Erzeugung von mikrofeinen Gasblasen können dabei einzeln als auch in Kombination angewendet werden. Auch können derartige Gasblasen mittels des Perlator-Prinzips erzeugt werden, welches bei Wasserhähnen zum Einsatz kommt. Zur Erzeugung der mikrofeinen Gasblasen ist die spezielle Perlatorausführung jedoch gegebenenfalls abzuwandeln.

Bei all diesen Möglichkeiten ist es besonders zweckmäßig, wenn die Flüssigkeit kontinuierlich oder quasi-kontinuierlich zum Auslaß gefördert wird. Dies hat sich bei den durchgeführten Versuchen als besonders vorteilhaft im Hinblick auf die Erzeugung von mikrofeinen Gasblasen herausgestellt.

Die eingangs genannte Aufgabe wird durch die Erfindung auch gelöst mittels einer Spritzdüse gemäß Anspruch.

Wie bereits erläutert, wird die Flüssigkeit vor der Engstelle in der Zuleitung gestaut, mit der Folge, daß der Druck auf die Flüssigkeit erhöht wird. Dies bewirkt, daß mehr Sauerstoff in der Flüssigkeit gelöst werden kann. Beim Durchtritt durch die Engstelle entgast der Sauerstoff aus der Flüssigkeit und es bilden sich die mikrofeinen Gasblasen. Diese können dann zusammen mit der reinigend wirkenden Flüssigkeit bis tief in die Zahnfleischtaschen vordringen, um dort ihre heilende Wirkung zu entfalten.

Des weiteren wird durch die Engstelle in der Zuleitung die Geschwindigkeit der durch die Zuleitung fließenden Flüssigkeit erhöht. Die Engstelle stellt insoweit eine Venturi-Düse dar. Die erhöhte Fließgeschwindigkeit der Flüssigkeit nach der Engstelle und insbesondere die dadurch hervorgerufene Druckabsenkung unmittelbar hinter der Engstelle hat in der Flüssigkeit eine Gaskavitation zur Folge. Dadurch werden in der Flüssigkeit enthaltene größere Gasblasen in viele Teile zerstäubt, so daß sich die Anzahl der Gasblasen vergrößert und das Volumen der einzelnen Gasblasen verkleinert.

Wird nun vor der Engstelle der Flüssigkeit auf irgendeine Art und Weise Luft zugeführt, daß nicht nur Wasser, sondern auch Luft von der Pumpe angesaugt und in Richtung der Engstelle gepumpt wird, so enthält das Wasser diese Luft in der Form von größeren Gasblasen. Diese werden, wie beschrieben, durch die Engstelle in viele Teile zerstäubt, so daß auch aus diesen größeren Gasblasen letztendlich mikrofeine Gasblasen entstehen.

Insgesamt ergibt sich dadurch eine sehr gleichmäßige Verteilung von mikrofeinen Gasblasen in der Flüssigkeit. Dies hat zur Folge, daß die aus der Spritzdüse austretende Flüssigkeit ebenfalls gleichmäßig mit mikrofeinen Gasblasen versetzt ist.

Wie bereits erläutert, hat sich herausgestellt, daß derartige mikrofeine Gasblasen wesentlich länger "leben" als größere Gasblasen. Dies bedeutet, daß mikrofeine Gasblasen wesentlich länger in der Flüssigkeit gebunden bleiben als größere Gasblasen, also wesentlich später aus der Flüssigkeit ausscheiden.

Wird nun im Falle der Munddusche das Wasser mit den mikrofeinen Gasblasen insbesondere in Zahnfleischtaschen gespritzt, so dringen die mikrofeinen Gasblasen tiefer in die Zahnfleischtaschen vor als größere Gasblasen. Anaerobe Bakterien, die tief in den Zahnfleischtaschen angesiedelt sind, können somit von den mikrofeinen Gasblasen beaufschlagt werden. Durch die Erfindung wird also erreicht, daß der in den Gasblasen enthaltene Sauerstoff auch zu tief in den Zahnfleischtaschen vorhandenen Entzündungen vordringen kann. Dadurch können auch tief in den Zahnfleischtaschen angesiedelte Bakterien mit Hilfe der erfindungsgefäßen Munddusche angegriffen und somit Entzündungen des Zahnfleischs behandelt und geheilt werden.

Auch soll die Engstelle in Bewegungsrichtung der Flüssigkeit eine möglichst geringe Ausdehnung aufweisen. Auf diese Weise wird die Erzeugung der mikrofeinen Gasblasen wesentlich verbessert, insbesondere im Hinblick auf deren Anzahl und deren Größe.

Bei einer vorteilhaften Weiterbildung der Erfindung weist die Zuleitung einen Innendurchmesser in einem Bereich von etwa 0,5 mm bis etwa 0,9 mm auf, vorzugsweise etwa 0,7 mm, un die Engstelle weist einen Innendurchmesser in einem Bereich von etwa 0,2 mm bis etwa 0,5 mm auf, vorzugsweise etwa 0,4 mm. Diese Werte für die Abmessungen der Engstelle haben sich als besonders vorteilhaft im Hinblick auf die Erzeugung der mikrofeinen Gasblasen herausgestellt.

Bei einer weiteren vorteilhaften Weiterbildung der Erfindung liegt der Abstand der Engstelle von dem Auslaß in einem Bereich von etwa 2 mm bis etwa 80 mm, vorzugsweise in einem Bereich von etwa 4 mm bis etwa 10 mm. Die Engstelle ist also nicht zwingend unmittelbar am Auslaß der Spritzdüse angeordnet, sondern weist einen Abstand von dem Auslaß auf. Dies hat sich ebenfalls im Hinblick auf die Erzeugung der mikrofeinen Gasblasen als vorteilhaft herausgestellt.

Bei einer vorteilhaften Ausgestaltung der Erfindung sind die Zuleitung aus Kunststoff und die Engstelle mittels einer Verformung, insbesondere einer Warmverformung hergestellt. Dies stellt eine besonders einfache und kostengünstige Art und Weise dar, die Spritzdüse herzustellen.

Die Erfindung wird anhand der nachfolgenden Beschreibung von Ausführungsbeispielen, die in der Zeichnung näher dargestellt sind, erläutert.
- Fig. 1: zeigt eine schematische Darstellung eines Ausführungsbeispiels einer erfindungsgemäßen Spritzdüse in einem Längsschnitt, und
- Fig. 2: zeigt eine schematische Darstellung eines Diagramms mit zwei Kurven, die die zeugung von mikrofeinen Gasblasen betreffen.

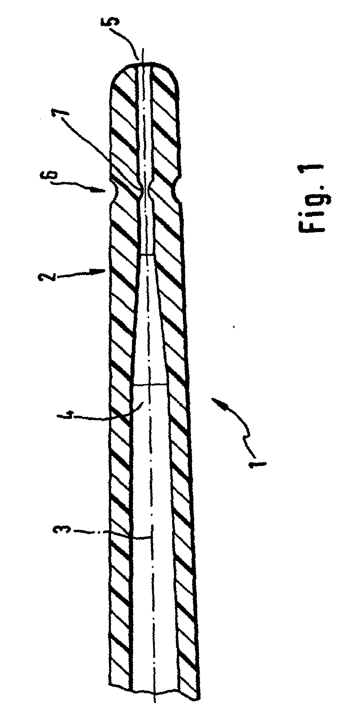

In der Figur 1 ist eine Spritzdüse 1 für eine Munddusche dargestellt. Die Spritzdüse 1 kann auf ein Handstück lösbar aufgesteckt werden, das über einen Schlauch mit der Munddusche verbunden ist. Die Munddusche weist einen Flüssigkeitsbehälter auf, der von einem Benutzer mit Wasser gefüllt werden kann. Im Gehäuse der Munddusche ist eine elektromotorisch angetriebene Pumpe untergebracht, mit deren Hilfe das Wasser aus dem Flüssigkeitsbehälter über den Schlauch zu dem Handstück und damit zu der Spritzdüse 1 gepumpt werden kann.

Im eingeschalteten Betriebszustand der Munddusche kann der von der Spritzdüse erzeugte Wasserstrahl von dem Benutzer zur Pflege und Reinigung der Zähne und des Zahnfleischs benutzt werden. Der Wasserstrahl kann dabei pulsierend oder rotierend umlaufend oder vorzugsweise kontinuierlich oder quasi-kontinuierlich sein.

Die Spritzdüse 1 weist einen Düsenkopf 2 auf, der etwa rohrförmig ausgestaltet ist und sich in Richtung einer Längsachse 3 erstreckt. In dem Düsenkopf 2 verläuft eine Zuleitung 4 in Richtung der Längsachse 3. Am freien Ende des Düsenkopfs 2 mündet die Zuleitung 4 in einen Auslaß 5. Im eingeschalteten Betriebszustand der Munddusche tritt aus dem Auslaß 5 ein einzelner Wasserstrahl aus.

Die Zuleitung 4 weist einen etwa kreisförmigen Querschnitt auf, der sich entlang der Längsachse 3 in Richtung zu dem Auslaß 5 verkleinert. Im Bereich vor dem Auslaß 5 ist der Innendurchmesser der Zuleitung 4 etwa konstant. In diesem Bereich ist die Zuleitung 4 mit einer Engstelle 6 versehen.

Im Bereich der Engstelle 6 besitzt die Zuleitung 4 einen Innendurchmesser von etwa 0,7 mm. Die Engstelle 6 ist als nach innen abstehender, ringförmiger Vorsprung 7 ausgebildet, der einen Innendurchmesser von etwa 0,4 mm aufweist. Der Abstand der Engstelle 6 von dem Auslaß 5 beträgt etwa 6 mm. Die Ausdehnung des Vorsprungs 7 und damit die Ausdehnung der Engstelle 6 in Richtung der Längsachse 3, also in Bewegungsrichtung des Wassers, ist möglichst gering.

Die Spritzdüse 1 ist aus Kunststoff hergestellt, wobei die Engstelle 6 durch eine Warmverformung des Kunststoffes erzeugt wird. Alternativ kann die Engstelle 6 als separates Bauteil aus Metall oder Kunststoff in den Düsenkopf 2 eingepaßt sein.

Im eingeschalteten Betriebszustand der Munddusche wird das Wasser aus dem Flüssigkeitsbehälter zu der Spritzdüse 1 gepumpt. Dadurch fließt das Wasser in der Zuleitung 4 in Richtung zu der Engstelle 6. Aufgrund der Engstelle 6 wird das Wasser vor der Engstelle 6 in der Zuleitung 4 gestaut. Dies bewirkt eine Erhöhung des auf das Wasser wirkenden Drucks und damit eine Erhöhung des in dem Wasser gelösten Sauerstoffs.

Beim Durchtritt des Wassers durch die Engstelle 6 wird das Wasser plötzlich entspannt. Dies bewirkt, daß der in dem Wasser gelöste Sauerstoff aus dem Wasser entgast und dann mikrofeine Gasblasen in dem Wasser bildet.

Des weiteren werden größere Gasblasen, die bereits vor der Engstelle beispielsweise durch Luftbeimischung dem Wasser zugeführt und damit in dem Wasser enthalten sind, durch die Engstelle 6 in viele Teile zerstäubt. Auf diese Weise entstehen eine große Anzahl weiterer mikrofeiner Gasblasen.

Die aus dem gelösten Sauerstoff erzeugten mikrofeinen Gasblasen und die aus größeren Gasblasen durch Teilung erzeugten mikrofeinen Gasblasen sind dann nach der Engstelle 6 gleichmäßig in dem Wasser enthalten.

Wird die Munddusche von einem Benutzer zur Reinigung insbesondere der Zahnfleischtaschen verwendet, so bleiben die mikrofeinen Gasblasen bis tief in die Zahnfleischtaschen in dem Wasser erhalten. Der in den mikrofeinen Gasblasen enthaltene Sauerstoff gelangt dadurch auch zu den anaeroben Bakterien, die tief in den Zahnfleischtaschen angesiedelt sind. Die durch derartige Bakterien verursachten Entzündungen des Zahnfleischs können durch die Zuführung des Sauerstoffs zu den anaeroben Bakterien behandelt und geheilt werden.

Anstelle der Engstelle 6 zur Erzeugung der mikrofeinen Gasblasen kann auch eine quirlartige Vorrichtung vorgesehen sein, mit der das Wasser gerührt oder geschlagen und damit Luft oder Sauerstoff in das Wasser eingebracht wird. Danach kann das Wasser verdichtet und vernebelt oder zerstäubt werden. Eine weitere Möglichkeit zur Erzeugung der mikrofeinen Gasblasen besteht darin, daß das Wasser zerhackt wird. Dies kann beispielsweise dadurch erreicht werden, daß das mit Luftblasen oder Sauerstoff bereits versehene Wasser durch eine Öffnung geleitet wird, die zyklisch geöffnet und geschlossen wird. Zu diesem Zweck kann der Öffnung eine umlaufende Blende oder dergleichen zugeordnet sein.

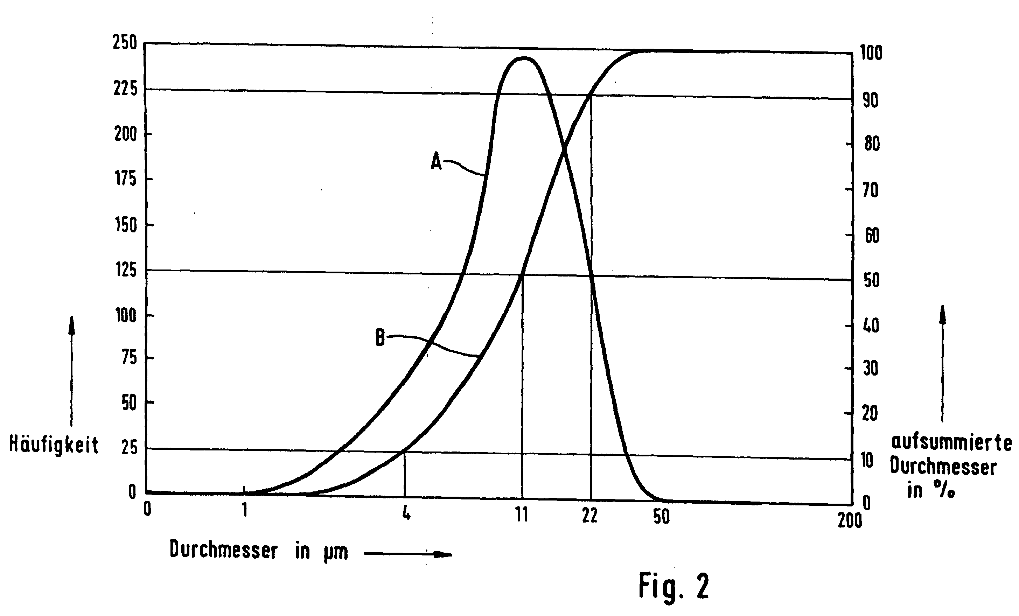

Figur 2 zeigt ein Diagramm mit zwei Kurven A und B, die mit Hilfe von Versuchen ermittelt worden sind. Bei den Versuchen wurde beispielsweise durch eine Veränderung der Engstelle 6, insbesondere durch eine Veränderung des Durchmessers der Engstelle 6, die Erzeugung von mikrofeinen Gasblasen beeinflußt. Dann wurde die Anzahl und die Durchmesser der erzeugten mikrofeinen Gasblasen für einen bestimmten Zeitraum gemessen und zu den Kurven A und b verarbeitet.

Auf der Abszisse des Diagramms ist für beide Kurven A und B der Durchmesser der mikrofeinen Gasblasen in µm aufgetragen. Für die Kurve A ist auf der Ordinate die Häufigkeit der mikrofeinen Gasblasen in absoluten Zahlen aufgetragen, und für die Kurve B ist auf der Ordinate der aufsummierte Durchmesser in % aufgetragen.

Die Kurve A des Diagramms stellt somit dar, wieviele mikrofeine Gasblasen mit einem bestimmten Durchmesser vorhanden sind, und die Kurve B stellt im wesentlichen das Integral über der Kurve A und damit ein Maß für das von den mikrofeinen Gasblasen transportierte Volumen dar.

Aus der Kurve A geht hervor, daß die mikrofeinen Gasblasen einen Durchmesser zwischen etwa 1 µm und etwa 50 µm aufweisen. Die größte Häufigkeit mikrofeiner Gasblasen tritt bei einem Druchmesser zwischen etwa 10 µm und etwa 12 µm auf, insbesondere bei einem Durchmesser von etwa 11 µm.

Des weiteren hat sich bei den Versuchen herausgestellt, daß mikrofeine Gasblasen mit einem Durchmesser ab etwa 200 µm und mehr nicht im Wasser gehalten werden, sondern sich sehr schnell wieder entmischen und aus dem Wasser entweichen.

In der Kurve B sind die Durchmesser der mikrofeinen Gasblasen entsprechend ihrer jeweiligen Häufigkeit aufsummiert und dann prozentual aufgetragen. Die Kurve B ist deshalb ausgehend von 0 stetig steigend. Sind alle mikrofeinen Gasblasen aufsummiert, so weist die Kurve B den Wert 100 % auf. Dies ist etwa bei dem Durchmesser der mikrofeinen Gasblasen von etwa 50 µm der Fall.

Aus der Kurve B geht hervor, daß die mikrofeinen Gasblasen mit einem Durchmesser, der kleiner ist als etwa 11 µm, etwa 50 % des maximal möglichen Volumens transportieren. Die andere Hälfte des Volumens fällt auf die mikrofeinen Gasblasen mit einem größeren Durchmesser.

Des weiteren ist aus der Kurve B ersichtlich, daß etwa 80 % des maximal möglichen Volumens von mikrofeinen Gasblasen transportiert wird, deren Durchmesser zwischen etwa 4 µm und etwa 22 µm liegt. Der letztgenannte Wert kann auch zwischen etwa 20 µm und etwa 25 µm schwanken. Dabei handelt es sich um die mittleren 80 % des maximal von den mikrofeinen Gasblasen transportierbaren Volumens, die ergänzt werden von einem 10 %-igen Volumenbeitrag der mikrofeinen Gasblasen mit einem Durchmesser kleiner als 4 µm und einem 10 %-igen Volumenbeitrag der mikrofeinen Gasblasen mit einem Durchmesser größer als 22 µm.

Aus der Zusammenschau der Kurven A und B ist zu erkennen, daß einerseits die mikrofeinen Gasblasen mit einem größeren Durchmesser einen größeren Beitrag zum Volumen leisten, daß aber andererseits die Häufigkeit dieser größeren mikrofeinen Gasblasen mit steigendem Durchmesser geringer wird. Des weiteren geht aus den Kurven A und B hervor, daß bei einem kleiner werdenden Durchmesser der mikrofeinen Gasblasen gleichzeitig die Häufigkeit und das transportierte Volumen ebenfalls kleiner werden.

Daraus ergibt sich ein bevorzugter Bereich für den Durchmesser der mikrofeinen Gasblasen, der etwa zwischen 4 µm und etwa 22 µm bzw. etwa 30 µm liegt. Ein besonders vorteilhafter Durchmesser für die mikrofeinen Gasblasen liegt etwa bei 11 µm.

## Patentansprüche

1. Verfahren zum Reinigen und Pflegen der Zähne und des Zahnfleisches, bei dem Luft einer Flüssigkeit zugeführt und die Flüssigkeit anschließend zu einem Auslaß (5) gefördert wird und aus diesem austritt, **dadurch gekennzeichnet, daß** stromabwärts der Luftzufuhr zur Flüssigkeit mit Hilfe einer Engstelle (6) vor dem Auslaß (5) mikrofeine Gasblasen in der Flüssigkeit erzeugt werden und die Flüssigkeit mit den mikrofeinen Gasblasen aus dem Auslaß (5) austritt, wobei die mikrofeinen Gasblasen einen Durchmesser von kleiner als bis zu etwa 200 µm aufweisen.

2. Verfahren nach Anspruch 1, **dadurch gekennzeichnet, daß** die mikrofeinen Gasblasen einen Durchmesser im Bereich von etwa 1 µm bis etwa 50 µm aufweisen.

3. Verfahren nach Patentanspruch 1 oder 2, **dadurch gekennzeichnet, daß** etwa die mittleren 80 % der mikrofeinen Gasblasen einen Durchmesser im Bereich von etwa 4 µm bis etwa 22 µm oder 30 µm aufweisen.

4. Verfahren nach einem der vorhergehenden Patentansprüche, **dadurch gekennzeichnet, daß** etwa 50 % der mikrofeinen Gasblasen einen Durchmesser von weniger als etwa 11 µm aufweisen.

5. Verfahren nach einem der vorhergehenden Patentansprüche, **dadurch gekennzeichnet, daß** die mikrofeinen Gasblasen mit Hilfe eines auf die Flüssigkeit ausgeübten Drucks erzeugt werden.

6. Verfahren nach Patentanspruch 5, **dadurch gekennzeichnet, daß** ein Druck in einem Bereich von etwa 2 bar bis etwa 20 bar erzeugt wird, insbesondere ein Druck in einem Bereich von etwa 5 bar bis etwa 8 bar.

7. Verfahren nach einem der vorhergehenden Patentansprüche, **dadurch gekennzeichnet, daß** die mikrofeinen Gasblasen durch ein quirlartiges Rühren er Flüssigkeit erzeugt werden.

8. Verfahren nach Patentanspruch 7, **dadurch gekennzeichnet, daß** die Flüssigkeit danach verdichtet wird.

9. Verfahren nach einem der vorhergehenden Patentansprüche, **dadurch gekennzeichnet, daß** die mikrofeinen Gasblasen durch ein Zerhacken der Flüssigkeit erzeugt werden.

10. Verfahren nach Patentanspruch 8, **dadurch gekennzeichnet, daß** die Flüssigkeit durch eine Öffnung geleitet wird, die zyklisch geöffnet und geschlossen wird.

11. Verfahren nach einem der vorhergehenden Patentansprüche, **dadurch gekennzeichnet, daß** die Flüssigkeit kontinuierlich oder quasi-kontinuierlich zum Auslaß (5) gefördert wird.

12. Spritzdüse (1) für eine Vorrichtung zur Reinigung und Pflege der Zähne und des Zahnfleischs, insbesondere für ein Handstück einer Munddusche, mit einem Düsenkopf (2), in dem eine Zuleitung (4) verläuft, die in einen Auslaß (5) mündet, aus dem eine Flüssigkeit austreten kann, **dadurch gekennzeichnet, daß** die Zuleitung (4) einen etwa kreisförmigen Querschnitt aufweist, und daß eine Engstelle (6) als nach innen abstehender, ringförmiger Vorsprung (7) ausgebildet ist.

13. Spritzdüse (1) nach Patentanspruch 12, **dadurch gekennzeichnet, daß** mit Hilfe der Engstelle (6) vor dem Auslaß (5) mikrofeine Gasblasen in der Flüssigkeit gebildet werden und die mikrofeinen Gasblasen einen Durchmesser von kleiner als etwa 200µm aufweisen.

14. Spritzdüse (1) nach einem der Patentansprüche 12 bis 13, **dadurch gekennzeichnet, daß** die Zuleitung (4) einen Innendurchmesser in einem Bereich von etwa 0,5 mm bis etwa 0,9 mm aufweist, vorzugsweise etwa 0,7 mm, und daß die Engstelle (6) einen Innendurchmesser in einem Bereich von etwa 0,2 mm bis etwa 0,5 mm aufweist, vorzugsweise etwa 0,4 mm.

15. Spritzdüse (1) nach einem der Patentansprüche 12 bis 14, **dadurch gekennzeichnet, daß** der Abstand der Engstelle (6) von dem Auslaß (5) in einem Bereich von etwa 2 mm bis etwa 80 mm liegt, vorzugsweise in einem Bereich von etwa 4 mm bis etwa 10 mm.

16. Spritzdüse (1) nach einem der Patentansprüche 12 bis 15, **dadurch gekennzeichnet, daß** die Zuleitung (4) aus Kunststoff und die Engstelle (6) mittels einer Verformung, insbesondere einer Warmverformung hergestellt sind.

17. Spritzdüse (1) nach einem der Patentansprüche 12 bis 16, **dadurch gekennzeichnet, daß** die mikrofeinen Gasblasen einen Durchmesser im Bereich von etwa 1 µm bis etwa 50 µm aufweisen.

18. Spritzdüse (1) nach einem der Patentansprüche, 12 bis 17, **dadurch gekennzeichnet, daß** etwa die mittleren 80 % der mikrofeinen Gasblasen einen Durchmesser im Bereich von etwa 4 µm bis etwa 22 µm oder 30 µm aufweisen.

19. Vorrichtung zur Reinigung und Pflege der Zähne und des Zahnfleischs, insbesondere Munddusche, mit einer Spritzdüse (1) nach einem der Patentansprüche 12 bis 18.

## Claims

1. A method for the cleansing and care of the teeth and gums, comprising the steps of feeding air to a liquid and subsequently conveying the liquid to and discharging it from an outlet orifice (5), **characterized by** the steps of producing, downstream of the supply of air to the liquid and by means of a constriction (6) arranged upstream of the outlet orifice (5), microfine gas bubbles in the liquid and discharging the liquid with the microfine gas bubbles from the outlet orifice (5), said microfine gas bubbles having a diameter not exceeding about 200 µm.

2. The method according to claim 1, **characterized in that** the microfine gas bubbles have a diameter in the range from about 1 µm to about 50 µm.

3. The method according to patent claim 1 or 2, **characterized in that** approximately the middle 80% of the microfine gas bubbles have a diameter in the range from about 4 µm to about 22 µm or 30 µm.

4. The method according to any one of the preceding patent claims, **characterized in that** about 50% of the microfine gas bubbles have a diameter of less than about 11 µm.

5. The method according to any one of the preceding patent claims, **characterized by** the step of producing the microfine gas bubbles by means of a pressure exerted on the liquid.

6. The method according to patent claim 5, **characterized by** the step of generating a pressure in a range from about 2 bar to about 20 bar, in particular a pressure in a range from about 5 bar to about 8 bar.

7. The method according to any one of the preceding patent claims, **characterized by** the step of producing the microfine gas bubbles by stirring of the liquid in a whirl-type action.

8. The method according to patent claim 7, **characterized by** the step of subsequently compressing the liquid.

9. The method according to any one of the preceding patent claims, **characterized by** the step of producing the microfine gas bubbles by chopping the liquid.

10. The method according to patent claim 8, **characterized by** the step of directing the liquid through an aperture which is opened and closed in cycles.

11. The method according to any one of the preceding patent claims, **characterized by** the step of conveying the liquid in a continuous or quasi-continuous stream to the outlet orifice (5).

12. A jet nozzle (1) for a device for the cleansing and care of the teeth and gums, particularly for a handpiece of an oral irrigator, with a nozzle head (2) in which a feed line (4) runs which opens into an outlet orifice (5) from which a liquid can emerge, **characterized in that** the feed line (4) has an approximately circular cross section and that a constriction (6) is formed as an inwardly protruding annular projection (7).

13. The jet nozzle (1) according to patent claim 12, **characterized in that** microfine gas bubbles are formed in the liquid by means of the constriction (6) arranged upstream of the outlet orifice (5), and that the microfine gas bubbles have a diameter smaller than about 200 µm.

14. The jet nozzle (1) according to any one of the patent claims 12 to 13, **characterized in that** the feed line (4) has an inner diameter in a range from about 0.5 mm to about 0.9 mm, preferably about 0.7 mm, and that the constriction (6) has an inner diameter in a range from about 0.2 mm to about 0.5 mm, preferably about 0.4 mm.

15. The jet nozzle (1) according to any one of the patent claims 12 to 14, **characterized in that** the relative distance of the constriction (6) to the outlet orifice (5) is in a range from about 2 mm to about 80 mm, preferably in a range from about 4 mm to about 10 mm.

16. The jet nozzle (1) according to any one of the patent claims 12 to 15, **characterized in that** the feed line (4) is made of plastic and the constriction (6) is obtained by means of a forming operation, in particular a hot forming operation.

17. The jet nozzle (1) according to any one of the patent claims 12 to 16, **characterized in that** the microfine gas bubbles have a diameter in the range from about 1 µm to about 50 µm.

18. The jet nozzle (1) according to any one of the patent claims 12 to 17, **characterized in that** approximately the middle 80% of the microfine gas bubbles have a diameter in the range from about 4 µm to about 22 µm or 30 µm.

19. A device for the cleansing and care of the teeth and gums, in particular an oral irrigator, with a jet nozzle (1) according to any one of the patent claims 12 to 18.

## Revendications

1. Procédé pour le nettoyage et le soin des dents et des gencives, dans lequel de l'air est introduit dans un liquide et le liquide est ensuite acheminé vers une sortie (5) et est projeté hors de celle-ci, **caractérisé en ce que**, en aval de l'admission d'air dans le liquide, des bulles gazeuses microfines sont générées dans le liquide au moyen d'un rétrécissement (6) réalisé en amont de la sortie (5) et le liquide avec les bulles gazeuses microfines est projeté hors de la sortie (5), les bulles gazeuses microfines ayant un diamètre inférieur à et au maximum égal à 200 µm environ.

2. Procédé selon la revendication 1, **caractérisé en ce que** les bulles gazeuses microfines ont un diamètre dans un domaine de 1 µm environ à 50 µm environ.

3. Procédé selon la revendication 1 ou 2, **caractérisé en ce que**, à peu près les 80 % centrés des bulles gazeuses microfines ont un diamètre dans le domaine de 4 µm environ à 22 µm environ ou 30 µm environ.

4. Procédé selon l'une quelconque des revendications précédentes, **caractérisé en ce qu'**environ 50 % des bulles gazeuses microfines ont un diamètre inférieur à 11 µm environ.

5. Procédé selon l'une quelconque des revendications précédentes, **caractérisé en ce que** les bulles gazeuses microfines sont générées par une pression exercée sur le liquide.

6. Procédé selon la revendication 5, **caractérisé en ce qu'**il est généré une pression dans un domaine de 2 bar environ à 20 bar environ, en particulier une pression dans un domaine de 5 bar environ à 8 bar environ.

7. Procédé selon l'une quelconque des revendications précédentes, **caractérisé en ce que** les bulles gazeuses microfines sont générées par un brassage du liquide sous forme de tourbillon.

8. Procédé selon la revendication 7, **caractérisé en ce que** le liquide est ensuite comprimé.

9. Procédé selon l'une quelconque des revendications précédentes, **caractérisé en ce que** les bulles gazeuses microfines sont générées par un hachage du liquide.

10. Procédé selon la revendication 8, **caractérisé en ce que** le liquide est guidé à travers un orifice qui s'ouvre et se ferme cycliquement.

11. Procédé selon l'une quelconque des revendications précédentes, **caractérisé en ce que** le liquide est acheminé en continu ou quasiment en continu vers la sortie (5).

12. Pulvérisateur (1) pour un dispositif de nettoyage et de soin des dents et des gencives, en particulier pour un manche d'une douche buccale, comportant une tête de pulvérisation (2), dans laquelle passe une conduite d'admission (4) qui débouche dans une sortie (5) hors de laquelle peut sortir un liquide, **caractérisé en ce que** la conduite d'admission (4) a une section à peu près circulaire et **en ce qu'**un rétrécissement (6) est réalisé sous la forme d'une saillie (7) annulaire dirigée vers l'intérieur.

13. Pulvérisateur (1) selon la revendication 12, **caractérisé en ce que** des bulles gazeuses microfines sont formées dans le liquide au moyen du rétrécissement (6) en amont de la sortie (5) et les bulles gazeuses microfines ont un diamètre inférieur à 200 µm environ.

14. Pulvérisateur (1) selon l'une quelconque des revendications 12 à 13, **caractérisé en ce que** la conduite d'admission (4) a un diamètre dans un domaine de 0,5 µm environ à 0,9 mm environ, de préférence de 0,7 mm environ et **en ce que** le rétrécissement (6) a un diamètre intérieur qui se situe dans un domaine de 0,2 mm environ à 0,5 mm environ, de préférence de 0,4 mm environ.

15. Pulvérisateur (1) selon l'une quelconque des revendications 12 à 14, **caractérisé en ce que** la distance entre le rétrécissement (6) et la sortie (5) se situe dans un domaine de 2 mm environ à 80 mm environ, de préférence dans un domaine de 4 mm environ à 10 mm environ.

16. Pulvérisateur (1) selon l'une quelconque des revendications 12 à 15, **caractérisé en ce que** la conduite d'admission (4) est en matière plastique et le rétrécissement (6) a été réalisé par formage, en particulier par un formage à chaud.

17. Pulvérisateur (1) selon l'une quelconque des revendications 12 à 16, **caractérisé en ce que** les bulles gazeuses microfines ont un diamètre dans un domaine de 1 µm environ à 50 µm environ.

18. Pulvérisateur (1) selon l'une quelconque des revendications 12 à 17, **caractérisé en ce que**, à peu près les 80 % centrés des bulles gazeuses microfines ont un diamètre dans le domaine de 4 µm environ à 22 µm environ ou 30 µm environ.

19. Dispositif pour le nettoyage et le soin des dents et des gencives, en particulier douche buccale, comportant un pulvérisateur (1) selon l'une quelconque des revendications 12 à 18.
